# EUROPÄISCHE PATENTSCHRIFT

(11) **EP 1 915 793 B1**
(45) Veröffentlichungstag und Bekanntmachung des Hinweises auf die Patenterteilung: **08.07.2015**
(21) Anmeldenummer: 06775812.8
(22) Anmeldetag: 05.08.2006
(51) Int. Cl.: H01M 8/02

(54) **SCHUTZ ANODENGESTÜTZTER HOCHTEMPERATURBRENNSTOFFZELLEN GEGEN REOXIDATION DER ANODE**
PROTECTION FOR ANODE-SUPPORTED HIGH-TEMPERATURE FUEL CELLS AGAINST REOXIDATION OF THE ANODE
PROTECTION DE CELLULES A COMBUSTIBLE HAUTE TEMPERATURE A PROTECTION ANODIQUE VIS-A-VIS DE LA REOXYDATION DE L'ANODE

(30) Priorität: 18.08.2005 DE 102005039442
(43) Veröffentlichungstag der Anmeldung: 30.04.2008
(73) Patentinhaber: Forschungszentrum Jülich GmbH, 52425 Jülich (DE)
(72) Erfinder: MERTENS, Josef, 52477 Alsdorf (DE); MENZLER, Norbert, 52428 Jülich (DE); BUCHKREMER, Hans Peter, 52525 Heinsberg (DE); STÖVER, Detlev, 52382 Niederzier (DE)
(86) Internationale Anmeldenummer: PCT/DE2006/001374
(87) Internationale Veröffentlichungsnummer: WO 2007/019821

(56) Entgegenhaltungen:
- WO-A-2004/001885
- WO-A2-93/20018
- WO-A2-99/21805
- WO-A2-2004/001875
- US-A- 4 853 352

## Beschreibung

Die Erfindung betrifft eine Vorrichtung zum Schutz der Anode einer anodengestützten Hochtemperaturbrennstoffzelle gegen Reoxidation.

### Stand der Technik

Eine Hochtemperaturbrennstoffzelle (SOFC) besteht aus einer porösen Anode, einem gasdichten, aber Sauerstoffionen leitenden Elektrolyten und einer porösen Kathode. An der Anode wird ein Brenngas, beispielsweise Wasserstoff oder Methan, zugeführt. An der Kathode wird ein Oxidationsmittel, beispielsweise Luft oder reiner Sauerstoff, zugeführt. Sauerstoffionen aus dem Oxidationsmittel werden durch den Elektrolyten in die Anode geleitet, wo sie das Brenngas oxidieren. Dabei werden neben Wärme auch Elektronen produziert, die einen externen elektrischen Verbraucher speisen können. Da eine einzelne Brennstoffzelle nur eine geringe Spannung abgibt, wird üblicherweise eine Vielzahl von Zellen zu einem Brennstoffzellenstapel (Stack) zusammengeschaltet.

Anode, Kathode und Elektrolyt können jeweils dünne Schichten sein, aber auch so massiv ausgelegt werden, dass sie der Brennstoffzelle ihre mechanische Stabilität geben. Man spricht dann von so genannten anoden-, kathoden- beziehungsweise elektrolytgestützten Zellen.

Das Substrat und die Anode einer anodengestützten Hochtemperaturbrennstoffzelle weisen häufig ein Cermet aus stabilisiertem Zirkoniumdioxid und metallischem Nickel auf, wobei das Nickel die elektrochemisch aktive Komponente ist. Bei der Herstellung des Substrats und der Anode wird partikelförmiges Nickeloxid (NiO) als Ausgangsmaterial verwendet. Dieses wird bei der ersten Inbetriebnahme der Zelle zu metallischem Nickel reduziert. Nachteilig reoxidiert das Nickel, sobald auf der Brenngasseite Luft in die Zelle eindringt, etwa wenn der Stack im Betrieb an- bzw. abgefahren wird. Das Volumen des dabei entstehenden Nickeloxids ist größer als das ursprüngliche Volumen der im Ausgangszustand verwendeten NiO-Partikel [Lit 1]. Dadurch kommt es zu Spannungen im Gefüge des Substrat- und Anodenmaterials, die sich in der Regel durch Bildung von Rissen abbauen. Auf Grund der hohen Spannungen kann auch der Elektrolyt reißen, wodurch die Brennstoffzelle unbrauchbar wird. Dieses Problem tritt selbst dann auf, wenn der Elektrolyt herstellungsbedingt unter Druckeigenspannung steht.

Aus der Empfindlichkeit von Hochtemperaturbrennstoffzellen gegen Reoxidation ergeben sich insbesondere dann Nachteile, wenn die Brennstoffzelle zur Bordstromerzeugung in einem Fahrzeug genutzt wird. Während der typischerweise längeren Standzeiten über Nacht und am Wochenende kann eine Eindiffusion von Luft auf der Anodenseite regelmäßig nicht verhindert werden. Des Weiteren wird es systembedingt seitens des Reformers zu Luftverunreinigungen auf der Brenngasseite kommen. Externe Vorrichtungen wie beispielsweise Rückschlagventile verursachen zusätzliche Kosten, erhöhen das Gewicht und benötigen Einbauraum.

Die Reoxidationsproblematik lässt sich vermindern, indem an Stelle von Nickel ein anderes elektrisch leitfähiges Material, wie beispielsweise Kupfer oder eine elektrisch leitende Keramik, verwendet wird. Nachteilig ist es bislang nicht gelungen, eine echte Alternative zu Nickel zu finden. Maßgeblich für die Brauchbarkeit eines leitfähigen Materials in einer Brennstoffzelle sind neben der elektrischen Leitfähigkeit die katalytische Aktivität, die Beständigkeit unter reduzierenden Bedingungen und eine möglichst geringe Reaktivität mit anderen Komponenten der Brennstoffzelle.

Um die Kraftübertragung von der Anode auf den Elektrolyten zu minimieren, kann die Zelle in elektrolyt- oder kathodengestützter Bauweise hergestellt werden. Elektrolytgestützte Zellen weisen den Nachteil auf, dass sie auf Grund der hohen Ohmschen Verluste im massiven Elektrolyten eine deutlich höhere Betriebstemperatur (etwa 1000 °C statt etwa 800 °C für anodengestützte Zellen) erfordern und ihre Leistungsdichte vergleichsweise gering ist. Da perowskitisches Kathodenmaterial teurer ist als Anodenmaterial, sind kathodengestützte Zellen teurer herzustellen als anodengestützte.

Um einen Teil der vom Anodenmaterial ausgeübten Kräfte aufzunehmen, können auf der Anodenseite metallische Tragstrukturen angebracht werden. Nachteilig verringern diese Tragstrukturen die Leistungsdichte der Zelle und können selbst anfällig gegen Reoxidation sein, so dass sie sich in ähnlicher Weise wie die Anode verziehen können. Damit können sie selbst zur Rissbildung beitragen.

Das metallische Nickel in der Anode lässt sich auch mit einer Oxidphase beschichten, um es im Inneren vor Reoxidation zu schützen. Nachteilig wird hierdurch die elektrische Leitfähigkeit des Nickels und damit die Leistungsausbeute der Zelle herabgesetzt.

Aus der US 2003 0235752 A1 sowie aus der US 6,744,235 B2 sind Sauerstofffänger in Form eines Schaums, Drahts oder Gestricks aus Nickel oder einer Nickellegierung für die Brenngasleitungen zu und von der Anode einer Hochtemperaturbrennstoffzelle bekannt. Diese werden von eindringender Luft vorrangig oxidiert und bei einer erneuten Inbetriebnahme der Zelle wieder reduziert. Nachteilig weisen diese Sauerstofffänger nur eine geringe Reaktionseffizienz auf und sind vergleichsweise teuer in der Herstellung.

### Aufgabe und Lösung

Aufgabe der Erfindung ist daher, eine Vorrichtung zum Schutz des Substrats und/oder der Anode einer anodengestützten Hochtemperaturbrennstoffzelle zur Verfügung zu stellen, die kostengünstig herstellbar ist und einen besseren Schutz gegen Reoxidation bietet als Sauerstofffänger nach dem Stand der Technik.

Diese Aufgabe wird erfindungsgemäß gelöst durch einen Brennstoffzellenstapel mit Sauerstofffänger gemäß Hauptanspruch und Nebenanspruch. Weitere vorteilhafte Ausgestaltungen ergeben sich aus den jeweiligen Unteransprüchen.

### Gegenstand der Erfindung

Im Rahmen der Erfindung wurde gefunden, dass sich ein Sauerstofffänger für eine Hochtemperaturbrennstoffzelle auf der Basis eines temperaturstabilen, inerten keramischen Grundwerkstoffs realisieren lässt. Der Grundwerkstoff wird mit einer kleinen Menge aktiven Materials veredelt, welches Sauerstoff zu binden vermag. Der poröse Grundwerkstoff stellt eine große Oberfläche für die Reaktion zur Verfügung, so dass die Reaktionseffizienz gegenüber dem Stand der Technik gesteigert wird. Im Verhältnis zu dieser Oberfläche ist nur ein kleines Volumen an aktivem Material erforderlich, was insbesondere dann vorteilhaft ist, wenn das aktive Material ein Oberflächenreaktand ist. Da die aktiven Materialien wesentlich teurer sind als der Grundwerkstoff, ist ein erfindungsgemäßer Sauerstofffänger kostengünstiger zu realisieren als ein Sauerstofffänger nach dem Stand der Technik.

In einer vorteilhaften Ausgestaltung der Erfindung wird stabilisiertes oder unstabilisiertes Zirkoniumdioxid, Aluminiumoxid, stabilisiertes oder unstabilisiertes Ceroxid, Siliziumkarbid oder Siliziumnitrid als Grundwerkstoff verwendet. Diese Materialien sind besonders temperaturstabil.

Metallisches Nickel als aktives Material weist den Vorteil auf, dass es in der Anode der Brennstoffzelle bereits verwendet wird. Dadurch wird die Herstellung vereinfacht. Insbesondere die Materialkombination mit Zirkoniumoxid als Grundwerkstoff stellt ein gebräuchliches Material als Werkstoff für Hochtemperaturbrennstoffzellen dar.

Beispielsweise kann der Sauerstofffänger ein Cermet aus Yttrium-stabilisiertem Zirkoniumoxid und metallischem Nickel sein und somit dem Anodenwerkstoff exakt entsprechen. Anode und Sauerstofffänger können somit über den gleichen großtechnischen Produktionsprozess hergestellt werden. Ein solcher Sauerstofffänger kann im Betrieb durch die immer wiederkehrende Reduktion und Reoxidation ebenso Risse entwickeln wie eine dem Sauerstoff ungeschützt ausgesetzte Anode. Da er jedoch ohnehin porös ist und er weder mechanisch an den gasdichten Elektrolyten gekoppelt ist, noch eine elektrochemische Funktion übernimmt, beeinträchtigt dies weder seine Funktionsfähigkeit, noch kann dadurch ein Zellversagen bewirkt werden. Nach dem Stand der Technik ist jeglicher Kontakt des Anodenwerkstoffs mit Sauerstoff problematisch. Im Rahmen der Erfindung wurde jedoch erkannt, dass der Anodenwerkstoff mit einem Sauerstofffänger aus Anodenwerkstoff vor dem Kontakt mit Sauerstoff geschützt werden kann.

Das aktive Material kann sich auf der Oberfläche des Grundwerkstoffs befinden, nachdem es dort beispielsweise durch Aufdampfen aufgebracht worden ist. Das Material kann sich aber auch in der Oberfläche des Grundwerkstoffs befinden, also in sie eingelagert sein, nachdem diese beispielsweise mit dem aktiven Material imprägniert wurde. Dies hat den Vorteil einer besseren Haftung zwischen aktivem Material und Grundwerkstoff. Das aktive Material kann aber auch in den Poren des Grundwerkstoffs eingelagert sein, was vorteilhaft die für die Sauerstoffbindung nutzbare Oberfläche weiter vergrößert. Diese Ausgestaltungen sind beliebig miteinander kombinierbar. Kombinationen führen vorteilhaft zu einer noch größeren Oberfläche mit aktivem Material und somit zu einer noch größeren Reaktionseffizienz.

Der Grundwerkstoff kann im Sauerstofffänger vorteilhaft als ein Vlies, ein Gestrick, ein Gewirk, eine Fasermatte, eine Paste, ein Schwamm oder eine Pulverschüttung vorliegen. Dadurch wird seine Porosität weiter vergrößert. Das aktive Material, mit dem der Grundwerkstoff veredelt ist, erhält so eine noch größere für die Sauerstoffbindung nutzbare Oberfläche.

Im Rahmen der Erfindung wurde ferner gefunden, dass auch durch ein in Pulverform mit einer Korngröße zwischen 50 µm und 100 µm vorliegendes aktives Material eine deutlich bessere Reaktionseffizienz erzielt werden kann als mit Sauerstofffängern nach dem Stand der Technik. Bei einem Pulver mit einer Korngröße von 100 µm steht eine um 50 % größere und bei einer Korngröße von 50 µm eine um 100 % größere Oberfläche für die Sauerstoffbindung zur Verfügung als bei einem Draht aus aktivem Material mit entsprechender gleicher Drahtdicke und gleichem Materialgewicht nach dem Stand der Technik.

Das Pulver kann bevorzugt in einem Käfig eingeschlossen vorliegen, so dass es leicht ausgetauscht werden kann, wenn es seine Wirkung irreversibel einbüßen sollte. Es kann aber auch in Form einer Schüttung vorliegen, über die das Brenngas streichen muss. Vorteil einer Pulverschüttung ist, dass aufgrund der lockeren Schüttung ausreichend freies Volumen für die Volumenzunahme durch Reoxidation verfügbar ist und dadurch keine schädliche mechanische Kraft auf die Umgebung ausgeübt wird.

Das aktive Material wird aus der Gruppe von Nickel, Kobalt, Zink, Zinn, Vanadium, Chrom, Mangan, Eisen, Molybdän, Titan, Cadmium und Silizium gewählt. Hierbei ist zu beachten, dass beispielsweise Titan oder Silizium den Sauerstoff sehr stark binden und nicht mehr mit Brenngas reduziert werden können. Diese Materialien sind somit nicht reversibel. Andere Materialien, wie Nickel, Kobalt oder Eisen, können nach der Oxidation wieder mit Brenngas reduziert werden. Diese Materialien regenerieren sich somit beim nächsten Anfahren der Brennstoffzelle nach dem Lufteinbruch. Die benötigte Menge an aktivem Material hängt von der jeweiligen Kinetik der Oxidation und Reduktion des Materials sowie von der Anzahl und Häufigkeit der im Betrieb auftretenden Reaktionszyklen ab und ist vom Fachmann zu berechnen bzw. in einer zumutbaren Anzahl an Versuchen zu ermitteln. Eine dritte Materialgruppe weist vorteilhaft mindestens zwei Oxidationsstufen auf, wie etwa Eisen mit Eisen-II-Oxid und Eisen-III-Oxid. Andere vorteilhafte Vertreter dieser Gruppe sind Di-Vanadium-Trioxid, Di-Chrom-Monoxid, Mangan-Monoxid, Eisen-Monoxid oder Di-Eisen-Tri-Oxid. Diese Materialien ändern bei Oxidation und Reduktion ihr Volumen weniger stark als reine Metalle, wodurch eine mechanische Beanspruchung des Sauerstofffängers im Betrieb verringert werden kann. Nachfolgend wird ein Verfahren beschrieben, bei dem der erfindungsgemäße Brennstoffzellenstapel eingesetzt wird, und der das Substrat beziehungsweise die Anode der Hochtemperaturbrennstoffzellen bei einem Lufteinbruch auf der Brenngasseite, wie er etwa beim An- oder Abfahren des Brennstoffzellenstapels auftreten kann, vor Reoxidation schützt. Im ersten Schritt dieses Verfahrens wird der eindringende Sauerstoff durch einen erfindungsgemäßen Sauerstofffänger gebunden. Dessen Aufnahmekapazität ist jedoch begrenzt. Damit die Brennstoffzelle nicht nach Erschöpfung des aktiven Materials schutzlos weiterem eindringenden Sauerstoff ausgesetzt ist, wird die Brennstoffzelle während oder nach dem Lufteinbruch zu einer Betriebsbedingung gefahren, bei der die Anode auch bei Vorhandensein von Luft nicht mehr nennenswert weiter reoxidiert. Unter "nicht mehr nennenswert" ist insbesondere zu verstehen, dass Spannungen im Anodenmaterial nicht mehr in einem Ausmaß entstehen, das den Elektrolyten gefährdet. Insbesondere kann die Brennstoffzelle vorteilhaft zum Schutz vor Reoxidation von ihrer normalen Betriebstemperatur von etwa 800 °C rasch auf etwa unter 600 °C abgekühlt werden. Bei dieser Temperatur ist die Reaktionskinetik des in der Anode enthaltenen Nickels bereits sehr langsam. Des Weiteren kann unter "nicht mehr nennenswert" ein Reoxidationsgrad von kleiner gleich 0,10 mol ½ O₂ / mol Ni verstanden werden.

Unter einer raschen Abkühlung ist insbesondere eine Abkühlung zu verstehen, die schneller verläuft als die passive Abfuhr der Restwärme aus der Brennstoffzelle nach Abschalten der Brenngaszufuhr. Insbesondere kann beim planmäßigen Herunterfahren der Brennstoffzelle durch zusätzliche Maßnahmen zur Wärmeabfuhr die Temperatur schnellstmöglich um 200 °C oder mehr gesenkt werden. Eine solche beschleunigte Abkühlung kann insbesondere mittels Wärmeabfuhr durch einen Lüfter oder mittels Zuführung eines Kühlmittels erfolgen.

Vorteilhaft wird der BZS während des Betriebs mit einer geeigneten Vorrichtung auf einen möglichen Lufteinbruch auf der Brenngasseite überwacht. Dadurch kann mit einer weiteren geeigneten Vorrichtung der Brennstoffzellenstapel bei Auftreten eines Lufteinbruchs automatisch zu einer reoxidationsstabilen Betriebsbedingung gefahren werden. Hierdurch ist sichergestellt, dass die Anode auch dann vor Reoxidation geschützt ist, wenn die Brennstoffzellen beispielsweise wegen einer Unterbrechung der Brenngaszufuhr ungeplant herunterfahren.

Im Rahmen der Erfindung wurde gefunden, dass sich erfindungsgemäß ein Sauerstofffänger als erste Ebene in einen Brennstoffzellenstapel integrieren lässt. In dieser Form benötigt der Sauerstofffänger besonders wenig Einbauraum, zumal nur ein Sauerstofffänger für alle Brennstoffzellen des Stapels erforderlich ist. Die Herstellung eines Brennstoffzellenstapels mit einem solchen Sauerstofffänger wird besonders einfach, wenn als Sauerstofffänger ein Material verwendet wird, das dem Anodenwerkstoff exakt entspricht. Dann können auch seine mechanischen Abmessungen so gewählt werden, dass sie denen einer Anode entsprechen. Somit kann zur Herstellung des Sauerstofffängers die gleiche Produktionslinie genutzt werden, mit der auch die Anode hergestellt wird.

### Spezieller Beschreibungsteil

Nachfolgend wird der Gegenstand der Erfindung anhand von Figuren näher erläutert, ohne dass der Gegenstand der Erfindung dadurch beschränkt wird. Es ist gezeigt:
- Figur 1:: Brennstoffzellenstapel mit einem Sauerstofffänger als erster Ebene.
- Figur 2:: Brennstoffzellenstapel mit einem in die Brenngaszufuhr integriertem Sauerstofffänger.

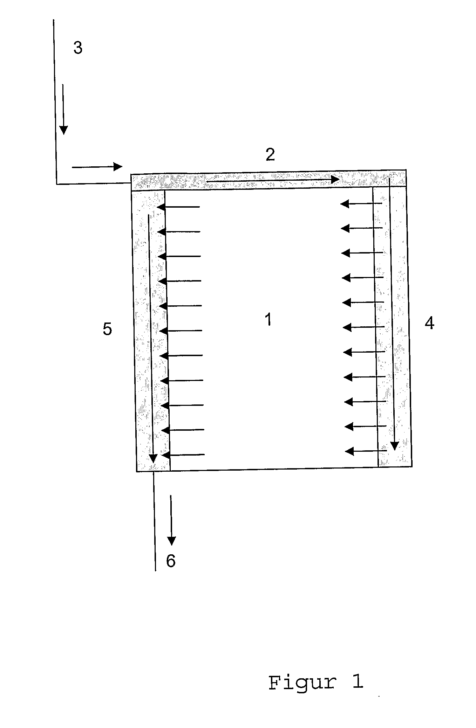

Figur 1 zeigt einen Brennstoffzellenstapel (Stack) 1, in den ein Sauerstofffänger 2 zwischen der Brenngaszufuhr 3 und den Gasverteilerstrukturen 4 als erste Ebene integriert ist. Das Brenngas überströmt zwangsläufig zunächst diese Ebene, bevor es am Ende der Ebene umgeleitet und in die Brennstoffzellen auf den weiteren Ebenen des Stapels geführt wird. Im Brenngas enthaltener Sauerstoff reagiert auf der Oberfläche des Sauerstofffängers und erreicht die Brennstoffzellen nicht. Das restliche Brenngas und das Abgas werden in den Gassammlern 5 gesammelt und verlassen den Brennstoffzellenstapel an der Position 6. Die Pfeile geben die Strömungsrichtung des Brenngases an.

Der Sauerstofffänger besteht erfindungsgemäß beispielsweise aus einer Pulverschüttung oder auch aus einem porösen Grundmaterial mit einer aktiven Beschichtung.

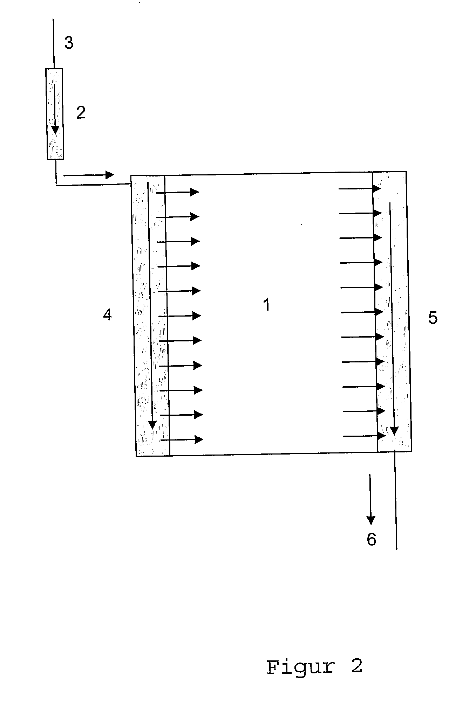

Figur 2 zeigt eine alternative Anordnung, bei der der eigentliche Brennstoffzellenstapel 1 unverändert bleibt. In das Brenngas-Zuleitungsrohr 3 ist eine Verbreiterung eingebaut, in welche der Sauerstofffänger 2 integriert ist. Das Brenngas wird über die Gasverteilerstrukturen 4 durch den Brennstoffzellenstapel geleitet. Unverbrannter Brennstoff und Abgas werden in den Gassammlern 5 gesammelt und verlassen den Brennstoffzellenstapel an der Position 6. Die Pfeile geben die Strömungsrichtung des Brenngases an.

In dieser Anordnung ist die Porosität des Sauerstofffängers so gewählt, dass der Druckverlust über den Fänger nicht zu groß wird, da sich ansonsten die Strömungsverhältnisse im Stack ändern. Anstatt des porösen Bauteils kann auch die Pulverschüttung in einem Käfig einbezogen werden.

## Patentansprüche

1. Brennstoffzellenstapel, enthaltend einen als Ebene zwischen der Brenngaszufuhr und den Brennstoffzellen angeordneten Sauerstofffänger zum Schutz des Substrats und/ oder der Anode der Brennstoffzellen,
**dadurch gekennzeichnet, dass**
der Sauerstofffänger aus einem temperaturstabilen, inerten keramischen Grundwerkstoff mit einer porösen Struktur und einem Sauerstoffbindenden aktiven Material besteht,
- wobei das Sauerstoffbindende aktive Material wenigstens ein Element der Gruppe aus Kobalt, Zink, Zinn, Vanadium, Chrom, Mangan, Eisen, Molybdän, Titan, Cadmium, Nickel und Silizium umfasst, und
- wobei das Sauerstoffbindende aktive Material entweder auf der Oberfläche des porösen Grundwerkstoffes angeordnet ist oder sich in der Oberfläche des porösen Grundwerkstoffes befindet.

2. Brennstoffzellenstapel nach Anspruch 1, mit stabilisiertem oder unstabilisiertem Zirkoniumdioxid, Aluminiumoxid, stabilisiertem oder unstabilisiertem Ceroxid, Siliziumkarbid oder Siliziumnitrid als Grundwerkstoff für den Sauerstofffänger.

3. Brennstoffzellenstapel nach einem der Ansprüche 1 bis 2, bei dem das aktive Material in den Poren des Grundwerkstoffes des Sauerstofffängers eingelagert ist.

4. Brennstoffzellenstapel nach einem der Ansprüche 1 bis 3, bei dem der Grundwerkstoff in Form eines Vlies, eines Gestricks, eines Gewirks, einer Fasermatte, einer Paste, eines Schwamms oder einer Pulverschüttung vorliegt.

5. Brennstoffzellenstapel nach einem der Ansprüche 1 bis 4, mit einem aktiven Material, welches bei Oxidation mindestens eine höhere Oxidationsstufe einnehmen kann.

6. Brennstoffzellenstapel nach Anspruch 5, mit V₂O₃, Cr₂O, MnO, FeO oder Fe₂O₃ als aktives Material.

## Claims

1. Fuel cell stack containing an oxygen trap arranged as a plane between the fuel gas supply and the fuel cells to protect the substrate and/or anode of the fuel cells,
**characterized in that**
the oxygen trap consists of a thermally stable, inert ceramic parent material with a porous structure and an oxygen-binding active material,
- wherein the oxygen-binding active material comprises at least one element from the group consisting of cobalt, zinc, tin, vanadium, chromium, manganese, iron, molybdenum, titanium, cadmium, nickel and silicon, and
- wherein the oxygen-binding active material is either arranged on the surface of the porous parent material or is located within the surface of the porous parent material.

2. Fuel cell stack according to Claim 1 with stabilized or unstabilized zirconium dioxide, aluminium oxide, stabilized or unstabilized cerium oxide, silicon carbide or silicon nitride as parent material for the oxygen trap.

3. Fuel cell stack according to either of Claims 1 and 2 in which the active material is embedded in the pores of the parent material of the oxygen trap.

4. Fuel cell stack according to any one of Claims 1 to 3 in which the parent material is in the form of a nonwoven or knitted fabric, fibre mat, paste, sponge, or powder fill.

5. Fuel cell stack according to any one of Claims 1 to 4 with an active material capable of assuming at least one higher oxidation stage upon oxidation.

6. Fuel cell stack according to Claim 5, with V₂O₃, Cr₂O, MnO, FeO or Fe₂O₃ as active material.

## Revendications

1. Empilement de piles à combustible, contenant un piégeur d'oxygène disposé comme plan entre l'amenée de gaz combustible et les piles à combustible afin de protéger le substrat et/ou l'anode des piles à combustible,
**caractérisé en ce que**
le piégeur d'oxygène se compose d'un matériau de base céramique inerte thermostable ayant une structure poreuse et un matériau actif liant l'oxygène,
- dans lequel le matériau actif liant l'oxygène comprend au moins un élément du groupe constitué par le cobalt, le zinc, l'étain, le vanadium, le chrome, le manganèse, le fer, le molybdène, le titane, le cadmium, le nickel et le silicium, et
- dans lequel le matériau actif liant l'oxygène est disposé soit sur la surface du matériau de base poreux soit se trouve dans la surface du matériau de base poreux.

2. Empilement de piles à combustible selon la revendication 1, comprenant du dioxyde de zirconium stabilisé ou non stabilisé, de l'oxyde d'aluminium, de l'oxyde de cérium stabilisé ou non stabilisé, du carbure de silicium ou du nitrure de silicium comme matériau de base pour le piégeur d'oxygène.

3. Empilement de piles à combustible selon l'une des revendications 1 à 2, dans lequel le matériau actif est incrusté dans les pores du matériau de base du piégeur d'oxygène.

4. Empilement de piles à combustible selon l'une des revendications 1 à 3, dans lequel le matériau de base se présente sous la forme d'un voile, d'un tricot, d'un aiguilleté, d'un matelas de fibres, d'une pâte, d'une suspension ou d'une poudre en vrac.

5. Empilement de piles à combustible selon l'une des revendications 1 à 4, comprenant un matériau actif qui peut acquérir au moins un degré d'oxydation supérieur lors de l'oxydation.

6. Empilement de piles à combustible selon la revendication 5, comprenant du V₂O₃, Cr₂O, MnO, FeO ou Fe₂O₃ comme matériau actif.
